# EUROPEAN PATENT APPLICATION

(11) **EP 4 703 197 A1**
(43) Date of publication of application: **04.03.2026**
(21) Application number: 24197569.7
(22) Date of filing: 30.08.2024
(51) Int. Cl.: B60N 2/28

(54) **A CHILD VEHICLE SEAT**

(71) Applicant: Maxi Miliaan B.V., 5704 RD Helmond (NL)
(72) Inventor: Olfers, Dennis, 5595 AV Leende (NL); Toonders, Sander Gerardus, 5554 ET Valkenswaard (NL)
(74) Representative: Veldman-Dijkers, Cornelia G. C.

(57) **Abstract**

A child vehicle seat comprising a seat provided with a seat portion (26) and a backrest portion (27) extending upwardly from the seat portion, a harness (32) coupled to the seat and adapted to secure a child to the seat. The harness is movable from a fastened position to secure the child to the seat to an unfastened position to receive the child in the seat and vice versa. The harness comprises at least two shoulder belts (33) coupled to the backrest portion of the seat. Each shoulder belt comprises a biasing element (40) for positioning the harness in an open child-receiving position when the harness is in the unfastened position. The harness is movable to a stored position, wherein the biasing elements have an elongated straight shape, whereby the shoulder belts as well as the biasing elements extend along the backrest portion (26).

## Description

### FIELD OF THE INVENTION

The invention relates to a child vehicle seat comprising:
- a seat provided with a seat portion and a backrest portion extending upwardly from the seat portion,
- a harness coupled to the seat and adapted to secure a child to the seat, wherein the harness is movable from a fastened position to secure the child to the seat to an unfastened position to receive the child in the seat and vice versa, which harness comprises at least two shoulder belts coupled to the backrest portion of the seat, whereby each shoulder belt comprises a biasing element for positioning the harness in an open child-receiving position when the harness is in the unfastened position.

### BACKGROUND OF THE INVENTION

By such a child vehicle seat as known from EP2221212B1, the biasing elements move the shoulder belts under spring force of the biasing elements to an open child-receiving position when the harness is in the unfastened position. This has the advantage that in the open child-receiving position the harness has been moved away from the backrest portion and the seat portion when an adult wants to place a child in the seat. The arms of the children can easily be inserted in the openings below the opened harness. After placing the child in the seat, the harness will be moved to the fastened position to secure the child to the seat. When the harness is being unfastened again, the biasing elements will move the shoulder belts away from the child making it easier to remove the child from the seat.

Furthermore, EP2221212B1 relates to chid vehicle seat which can be converted from a child restrain by means of the harness of the child vehicle seat to a child restrain by means of a vehicle seat belt.

The first type of restraint by means of the harness of the child vehicle seat is used for the smallest children (group 1). In this case, the belt of the vehicle can be used to maintain the child vehicle seat on the seat of the vehicle, unless the latter is maintained by dedicated means, such as Isofix^{®} clamps.

The second type of restraint, approximately starting at the age of 3 years, more precisely starting from a weight of the child greater than or equal to 15 kg, is the three-point seat belt of the vehicle to maintain the child (group 2/3) in the child vehicle seat.

When converting the child vehicle seat of EP2221212B1 seat from a group 1 seat to a group 2/3 seat, the harness as well as the biasing elements of the shoulder belts are being removed from the child vehicle seat.

The harnesses cannot simply be placed against the backrest portion and/or seat portion since due to the biasing elements the harness will automatically be returned to the open child-receiving position when the harness is in the unfastened position.

Removal of the harness has the disadvantages that the harness needs to be stored somewhere else with the risk of losing it, the risk that an adult forgets to connect the harness back to the seat when using it for small children, the risk of wrong re-installation etc.

### SUMMARY OF THE INVENTION

At least one of the objects of the invention is to provide a child vehicle seat which can easily be converted from a harness-restraining condition to a vehicle seat belt-restraining condition and back.

This object is accomplished with the child vehicle seat according to the invention in that the harness is movable to a stored position, wherein the biasing elements have an elongated straight shape, whereby the shoulder belts as well as the biasing elements extend along the backrest portion.

In the stored position the biasing elements have an elongated straight shape so that they can easily be stored together with the shoulder belts against the backrest portion.

The shoulder belts are preferably in a flat position against the backrest portion and more preferably in a suitable recess in the backrest portion so that the stored shoulder belts will not hinder the child sitting against the backrest portion.

Since the harness is stored on the child vehicle seat itself the harness needs no longer to be removed from the seat and can easily be used again, if needed.

Preferable in the stored position the biasing elements are in a non-loaded state, whereby no or nearly no forces are applied on the biasing elements to maintain the biasing elements in the stored position. This prevents that the biasing elements will undesirably move back from the stored position back to the use position.

An embodiment of the child vehicle seat according to the invention is characterized in that the biasing elements are pivotably about pivot axes connected to the backrest portion, to be pivotable from the stored position whereby the biasing elements extend from the pivot axes towards the seat portion to a use position, whereby in the open child-receiving position of the harness at least a part of the biasing elements extend from the pivot axes upwards away from the seat portion.

Pivoting the biasing elements is an easy way to move the biasing elements from the stored position to the use position.

In the stored position the biasing elements extend from the pivot axes towards the seat portion along the backrest portion, preferably in an unloaded state and with an elongated straight shape, thereby needing only a small amount of storage space and no or nearly no force to maintain the biasing elements in the stored position.

In the open child-receiving position of the harness the biasing elements extend from the pivot axes upwards away from the seat portion, thereby letting the shoulder belts also extending upwards proving space for the arms of a child to be easily inserted under the shoulder belts.

When the harness is being moved to the fastened position, ends of the biasing elements located remote of the pivot axes are moved against spring force of the biasing elements in the direction of the seat portion, whereby the biasing elements will be deformed. As soon as the harness is unfastened, the biasing elements will move under spring force away from the seat portion and the harness will move towards the open child-receiving position.

Another embodiment of the child vehicle seat according to the invention is characterized in that the backrest portion is provided with a locking mechanism to lock the biasing elements in locked positions, when the harness is in the stored position.

The locking mechanism locks the biasing elements in the locked positions, thereby preventing the biasing elements to be accidentally moved back to the use position.

Another embodiment of the child vehicle seat according to the invention is characterized in that the backrest portion comprises a headrest being movable with respect to the backrest portion, wherein the locking mechanism is mounted on the headrest of the backrest portion.

When the locking mechanism is mounted on the headrest of the backrest portion, also the shoulder belts and the corresponding biasing elements are connected to the headrest. This has the advantage that the height of shoulder belts with respect to the seat portion is automatically adjusted when the headrest is being adjusted to the size of the child to be seated in the seat of the child vehicle seat.

Another embodiment of the child vehicle seat according to the invention is characterized in that the locking mechanism comprises two locking parts, one for each biasing element, wherein each locking part being movable against spring force from a closed position wherein the corresponding biasing element is maintained locked in the locked position or maintained in a use position to position the corresponding shoulder belt of the harness in an open child-receiving position when the harness is in the unfastened position to an opened position of the two locking parts to enable the biasing elements to be moved from the locked position to the use position and vice versa.

In the closed position of the locking part, the corresponding biasing element is located on a first or a second side of the locking part. When located on the first side of the locking part, the locking part maintains the biasing element in the locked position. When located on the second side of the locking part, the biasing element is in the use position.

In the opened position of the locking part, the biasing elements can be moved from the locked position to the use position and vice versa.

Due to the locking parts, the biasing elements can easily be brought and maintained in the desired stored position or use position.

Another embodiment of the child vehicle seat according to the invention is characterized in that the locking parts are independently movable against spring force from the closed position to the opened position.

A user will have to move each locking part separately against spring force to the desired position. An advantage of this embodiment is that it has a limited number of components. Furthermore, it is easy to move the biasing elements one-by-one from the use position to the stored position and vice versa.

Another embodiment of the child vehicle seat according to the invention is characterized in that the locking mechanism comprises a lever mechanism to simultaneously move the locking parts against spring force from the closed position to the opened position.

This has the advantage that a user only needs to actuate the single lever mechanism to simultaneously move the two locking parts against spring force from the closed position to the opened position.

Another embodiment of the child vehicle seat according to the invention is characterized in that the biasing elements are pivotably connected to the locking mechanism.

Pivoting the biasing elements is an easy way to move the biasing elements from the stored position to the use position and vice versa.

Another embodiment of the child vehicle seat according to the invention is characterized in that in the stored position of the harness, the shoulder belts as well as the biasing elements extend substantially parallel to the backrest portion.

In this manner the shoulder belts as well as the biasing elements will be neatly stored along and against the backrest portion and will provide nearly no or none discomfort of the child. When located in a recess in the backrest portion, there is no drawback for the comfort of the child.

Another embodiment of the child vehicle seat according to the invention is characterized in that in the stored position of the harness, the biasing elements extend substantially parallel to each other.

In this manner the shoulder belts as well as the biasing elements will be neatly stored along and against the backrest portion.

Another embodiment of the child vehicle seat according to the invention is characterized in that in the stored position of the harness, the shoulder belts as well as the biasing elements are hidden behind upholstery of the backrest portion.

By hiding the shoulder belts as well as the biasing elements behind upholstery of the backrest portion, and if present also behind upholstery of the headrest of the backrest portion, the shoulder belts as well as the biasing elements are easily taken out of sight so that the child vehicle seat when used as a group 2/3 seat has a nice appearance. Furthermore, there is less risk that the harness will be used for group 2/3 children. The stored harness is easy accessible for the user like parent to transfer the harness from the use position to the stored position and vice versa.

If the harness also comprises lap belts, also the lap belts will be hidden behind upholstery of the backrest portion, the seat portion or a side wing portion of the seat.

Another embodiment of the child vehicle seat according to the invention is characterized in that the biasing element comprises an elongated straight coiled spring.

Such an elongated straight coiled spring will have an elongated straight shape when in a non-loaded state, can easily be deformed in the fastened and unfastened position of the harness and will take little space. A coiled string is cheap and easy to produce and assemble. By changing the diameter and the distance of the coils, the characteristics of the spring load can easily be tuned to the desired performance of the biasing elements.

### BRIEF DESCRIPTION OF THE DRAWINGS

The child vehicle seat according to the invention will further be explained with reference to the drawings, wherein,
figure 1 is a perspective view of a child vehicle seat according to the prior art with the harness in the unfastened position,
figure 2 is a perspective view the child vehicle seat as shown in figure 1 with the harness in the fastened position,
figure 3 is a perspective view of a child vehicle seat according to the invention with the harness in the fastened position,
figures 4A and 4B are a front view and a perspective view of the child vehicle seat as shown in figure 3, with the harness in the fastened position and the biasing elements in the use position and shown, for sake of illustration, outside of the shoulder belts,
figures 5A-5C are an exploded view, a perspective front view and a side view of a first embodiment of locking mechanism of the child vehicle seat according to the invention, with the biasing elements in the use position,
figures 6A-6B are a perspective front view and a side view of the first embodiment of locking mechanism as shown in the figures 5A-5C, with the biasing elements in an intermediate position between the use position and the stored position.
figures 7A-7C are an exploded view, a perspective front view and a side view of the first embodiment of locking mechanism as shown in the figures 5A-5C, with the biasing elements in the stored position,
figure 8 is a perspective view of a child vehicle seat according to the invention with the harness in the stored position,
figures 9A and 9B are a front view and a perspective view of the child vehicle seat as shown in figure 8, with the harness (not shown) in the stored position and the biasing elements in the stored position,
figures 10A-10D are exploded view, a perspective front view, a perspective side view and a side view of a second embodiment of locking mechanism of the child vehicle seat according to the invention, with the biasing elements in the use position,
figure 11 is a perspective side view of a second embodiment of locking mechanism as shown in the figures 10A-10D, with one of the biasing elements in the use position and one of the biasing elements in an intermediate position between the use position and the stored position,
figure 12 is a perspective side view of a second embodiment of locking mechanism as shown in the figures 10A-10D, with one of the biasing elements in the use position and one of the biasing elements in the stored position,
figure 13 is a perspective side view of a second embodiment of locking mechanism as shown in the figures 10A-10D, with one of the biasing elements in an intermediate position between the use position and the stored position and one of the biasing elements in the stored position,
figure 14A-14B are an exploded view and perspective side view of a second embodiment of locking mechanism as shown in the figures 10A-10D, with both biasing elements in the stored position.

In the drawings, like reference numerals refer to like elements.

### DESCRIPTION OF PREFERRED EMBODIMENTS

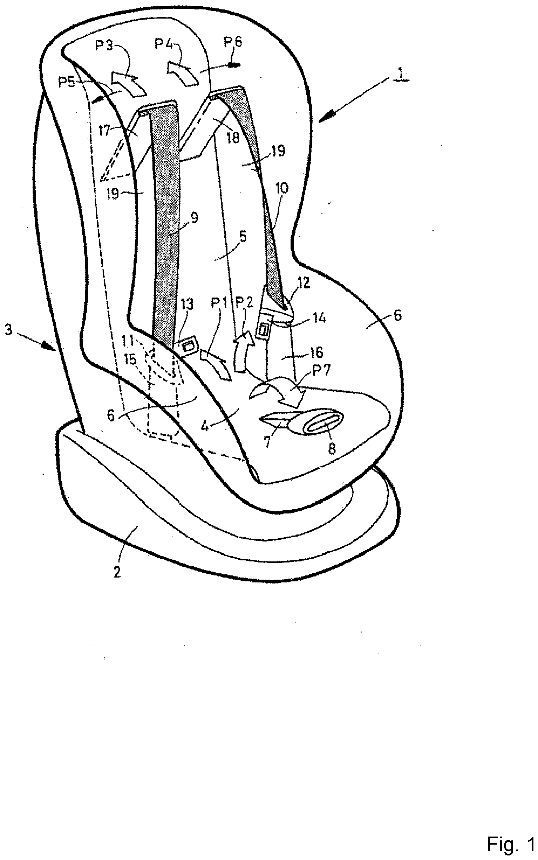

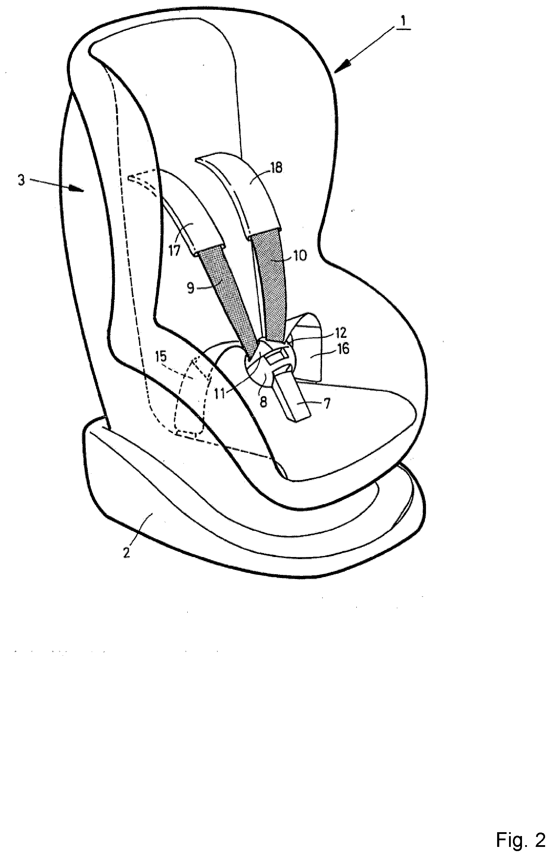

Figures 1 and 2 shows a child seat 1 according to the prior art, which comprises a base 2 and a seat 3. The seat 3 comprises a seat portion 4 and a backrest portion 5 connected thereto. The seat portion 4 is bounded by armrests 6 on both longitudinal sides. The child seat 1 comprises a crotch member portion 7, which is connected to the seat portion 4 with one end and which is provided with a buckle lock 8 on a side remote from the seat portion 4.

The child vehicle seat 1 further comprises two belts 9, 10, which are each connected to the seat 3 with one end at the location of a transition between the seat portion 4 and the armrests 6. The ends of the belts 9, 10 at a distance from the seat portion 4 extend through the backrest portion 5 and are adjustable for length on a rear side of the backrest portion 5, in dependence on the size of the child to be secured in the child vehicle seat 1. Belt buckles 11, 12 can slide over the belts 9, 10, which belt buckles 11, 12 are each provided with a buckle tongue, which can be interlocked with the buckle lock 8. The lower portions of the belts 9, 10 form lap belts, whilst the upper portions of the belts 9, 10 form shoulder belts.

The child seat 1 comprises two spring sleeves 15, 16, which are connected to the seat 3 at the location of the transition between the seat portion 4 and the armrests 6, through which sleeves 15, 16 the belts 9, 10 extend. The attachment of the spring sleeves 15, 16 to the seat 3 is such that the sleeves 15, 16 move in the directions indicated by the arrows P1, P2 to first positions shown in figure 1, in which they abut against the armrests 6, under the influence of spring force.

The child seat 1 furthermore comprises two spring sleeves 17, 18, forming biasing elements, which spring sleeves 17, 18 are connected to the backrest portion 5 with one end at the location of the passages of the belts 9, 10 through the backrest portion 5. The belts 9, 10 extend through the sleeves 17, 18 and are slidably accommodated therein. The sleeves 17, 18 and the portions of the belts 9, 10 present therein are moved in the directions indicated by the arrows P3, P4 to the first positions as shown in figure 1 under the influence of the spring force of the spring sleeves 17, 18. The extent to which the spring sleeves 17, 18 are moved in the direction indicated by the arrows P3, P4 partially depends on the length of the belts 9, 10. If the belts 9, 10 are relatively long, the sleeves 17, 18 will abut against the backrest portion 5 under the influence of the spring force.

Preferably, the sleeves 17, 18 are shaped such that the sleeves 17, 18 can also be pivoted in directions P5, P6 away from each other under the influence of the spring force.

The crotch member 7 is provided with an internal spring, by means of which the crotch member 7 is moved in the direction indicated by the arrow P7, away from the backrest portion 5, to a first position in which it abuts against the seat portion 4.

In the first positions of the belts 9, 10 as shown in figure 1, lap belt portions of the belts 9, 10 are present in the spring sleeves 15, 16, which lap belt portions have been moved to the positions in which they abut against the armrests 6 by the spring sleeves 15, 16. Present within the sleeves 17, 18 are shoulder belt portions of the belts 9, 10 that have been to upwardly extending positions as shown in figure 1 by the spring sleeves 17, 18.

In the position of the sleeves 17, 18 that is shown in figure 1, the belts 9, 10 form arm passages 19 with the seat portion 4 and the back support 5, through which passages a child seated in the child seat 1 can pass its arms.

It will be understood that in the position of the belts 9, 10 and the crotch member 7 that is shown in figure 1, a child can be placed on the seat portion 4 without any difficulty, without the belts 9, 10 or the crotch member 7 forming an impediment. Also the part of the backrest portion 5 against which the child's back will abut is clear of belts 9, 10. The child's head is positioned between the sleeves 17, 18. The space that is available between the sleeves 17, 18 is sufficiently large; so that the child will not be impeded by the sleeves 17, 18. After the child's arms have been passed through the arm passages 19, a parent, for example, will take hold of the buckle tongues 13, 14 and pivot the crotch member 7 in the opposite direction of the arrow P7, so that the buckle tongues 13, 14 can be inserted into the buckle lock 8 and be interlocked therewith. The sleeves 15, 16, 17, 18 will be moved against spring force in the opposite directions of the arrows P1, P2, P3, P4, P5, P6 to the positions that are shown in figure 2. In said second positions of the belts 9, 10 and the crotch member 7 that are shown in figure 2, the belts 9, 10 and the crotch member 7 are interlocked and the child is firmly retained in the child seat 1.

When the child is to be taken out of the child seat 1, the buckle lock 8 is unlocked, so that the buckle tongues 13, 14 can be removed from the buckle lock 8. The belts 9, 10 will subsequently be moved in the directions indicated by the arrows P1-P6 under the influence of the spring sleeves 15, 16, 17, 18, due to which the belts 9, 10 will move away from the child and the child can be taken out of the child seat without any difficulty. In said first disconnected position, the length of the belts between the backrest portion 5 and the seat portion 4 preferably remains at least substantially the same as or becomes greater than in the second, connected position. The length of the belts can be increased by moving the belts through the back support. In this way a relatively large arm passage is obtained, which makes it easier to place the child into the child seat. After the buckle lock 8 has been unlocked, the crotch member will also be automatically pivoted in the direction indicated by the arrow P7, into the position that is shown in figure 1, under the influence of the spring force, in which position the crotch member 7 does not form an impediment when the child is being taken out of the child seat 1.

The child seat 1 as described so far is known per se and will not be explained in more detail.

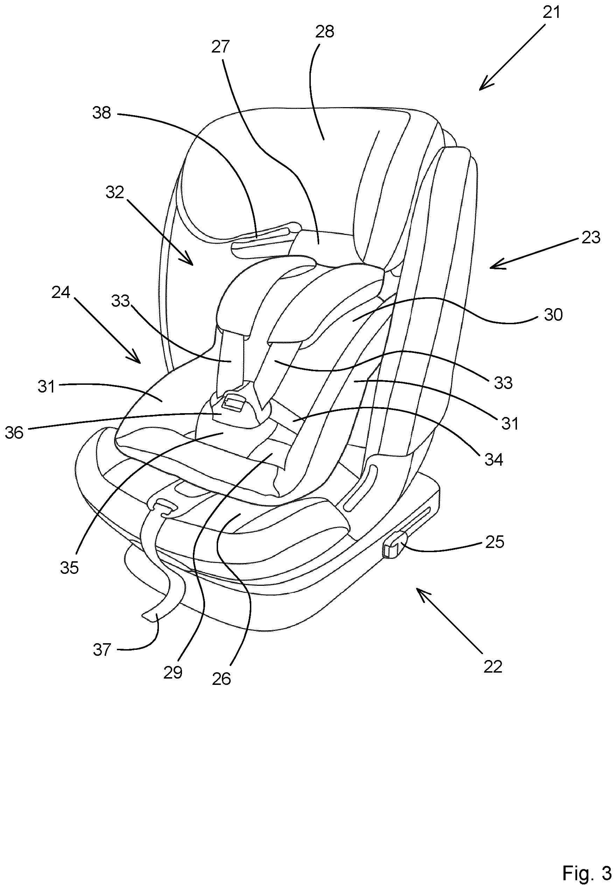

Figure 3 show a perspective view of a child vehicle seat 21 according to the invention. The child vehicle seat 21 comprises a base 22, a seat 23 and a removable inlay 24 for reducing the size of the seat 3.

The base 22 can be provided on both sides with ISOFIX-connectors being slidable in and out the base 22 by means of knobs 25. By means of the ISOFIX-connectors the child vehicle seat 21 can be connected in a manner known per se to a vehicle.

The seat 23 is provided with a seat portion 26, a backrest portion 27 and a movable headrest 28.

The inlay 24 is provided with an inlay seat portion 29, an inlay backrest portion 30 and side portions 31 extending between the inlay seat portion 29 and inlay backrest portion 30. As can be seen in figure 3, the inlay seat portion 29 rests on the seat portion 26 whilst the inlay backrest portion 30 rests against the backrest portion 27 of the seat 23. Due to the side portions 31 of the inlay 24 the width of the seat 23 is reduced.

When using the child vehicle seat 1 with or without the inlay 24 and with the movable headrest 28 in the position as shown, a harness 32 is being used to hold a child in the child vehicle seat 21.

The harness 12 comprises two shoulder belts 33, two lap belts 34 and one crotch belt 35 being detachably connected to each other by means of a buckle 36. The belts of the harness 32 can be tensioned by means of strap 37.

The child vehicle seat 21 is provided with biasing elements 40 as will be further explained here below, which like the sleeves 17, 18 of the known child vehicle seat 1 as described above, will position the shoulder belts 33 in an open child-receiving position when the harness 32 is in the unfastened position. The child vehicle seat 21 may also comprise two spring sleeves like spring sleeves 15, 16 for keeping the lap belts 34 in the open child-receiving position.

The headrest 28 is provided with belt guides 38 for guiding a vehicle belt (not shown).

The child vehicle seat 21 can be used as a group 1 seat for small children, wherein the child will be maintained in the seat 23 by means of the harness 32. When the child vehicle seat 21 will be used for elder and larger children, the child will be maintained in the seat 23 by means of the vehicle belt guided through one of the belt guides 38.

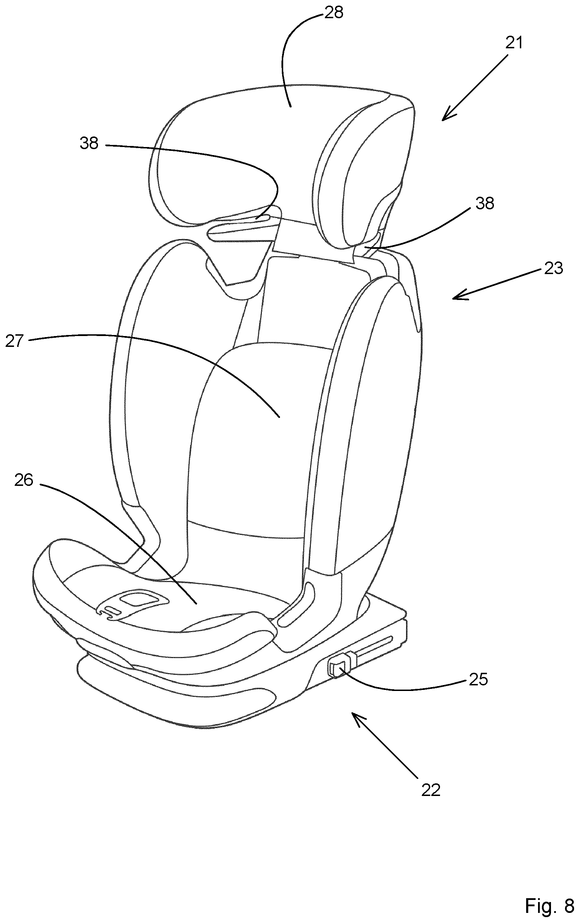

In figure 3 the headrest 28 is in a first headrest position and will be used as a group 1 seat for small children. In figure 8 the headrest 28 has been moved upwards, away from the seat portion 26 to a second headrest position. Furthermore, the inlay portion 24 has been removed so that the child vehicle seat can be used as a group 2/3 seat for larger children. As can be seen in figure 8, the harness 32 is not visible since it has been stored against the backrest portion 27 behind the upholstery of the backrest portion 27. The upholstery of the backrest portion 27 may comprise paddings, webbing, fabric and/or leather. The seat portion 26 is also provided with upholstery. The upholstery is made of different parts which can be folded aside to get access to rigid parts of the backrest portion 27. Such upholstery as described so far is known per se and will not be explained in more detail herein, therefore.

The child vehicle seat 21 is also provided with a known support leg 39 (not shown in the figures 3 and 8).

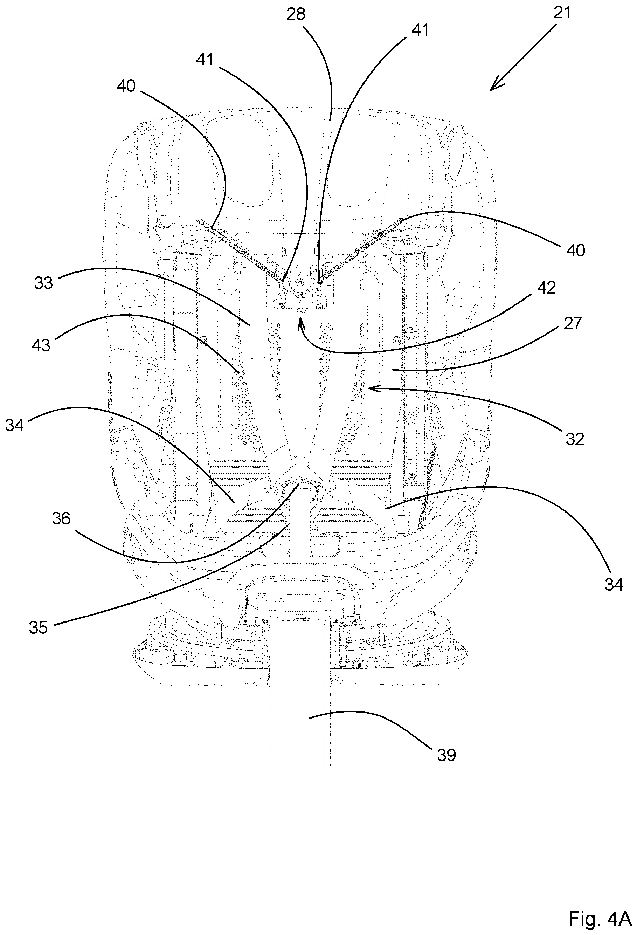

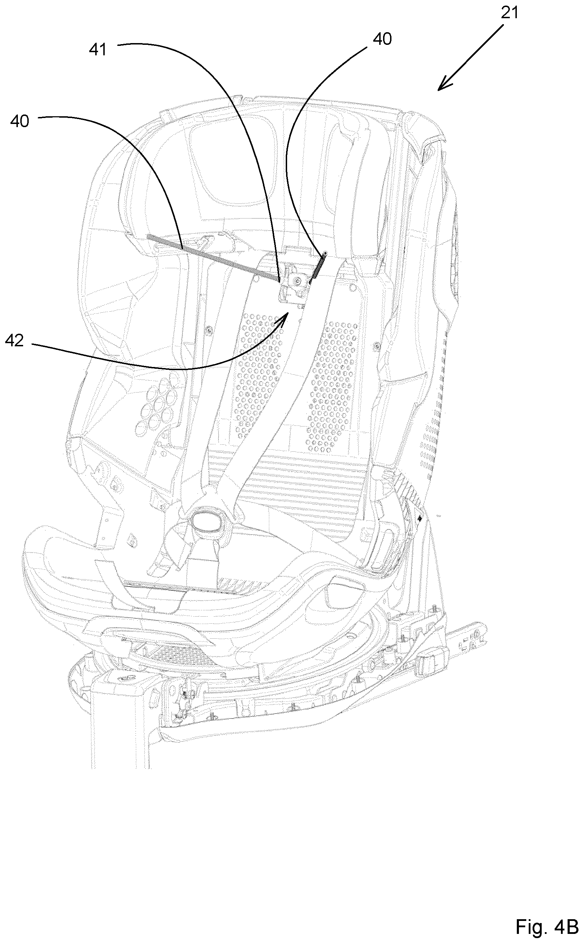

Figures 4A and 4B show a front view and a perspective view of the child vehicle seat 21 as shown in figure 3, with the harness 32 in the fastened position.

The child vehicle seat 21 comprises two biasing elements 40. For sake of illustration, the biasing elements 40 are shown outside of the shoulder belts 33. However, in use the biasing elements 40 are always located inside or connected to the shoulder belts 33 so that the biasing elements 40 functions in a similar manner as the spring sleeves 17, 18 of the prior art child vehicle seat 1.

Each biasing element 40 comprises an elongated straight coiled spring having an elongated straight shape when in a non-loaded state, for sake of illustration, as shown in the figures 4A and 4B.

Being in a non-loaded state means that no forces are applied on the biasing elements 40 due to which the biasing elements 40 would deform. In the non-loaded state, the biasing elements 40 extend upwardly, away from the seat portion 26 as well as away from each other.

In practice, with the harness 32 in the fastened position, the biasing elements 40 would be in a use position and be bent together with the shoulder belts 33 in the direction of the buckle 36, wherein with the harness 32 in the unfastened position, the biasing elements 40 would also be in a use position maintaining the harness 32 in the open child-receiving position.

First ends 41 of the biasing elements 40 are pivotably connected to a locking mechanism 42. The locking mechanism 42 is mounted on a back plate 43 being connected to the movable headrest 28 of the backrest portion 27.

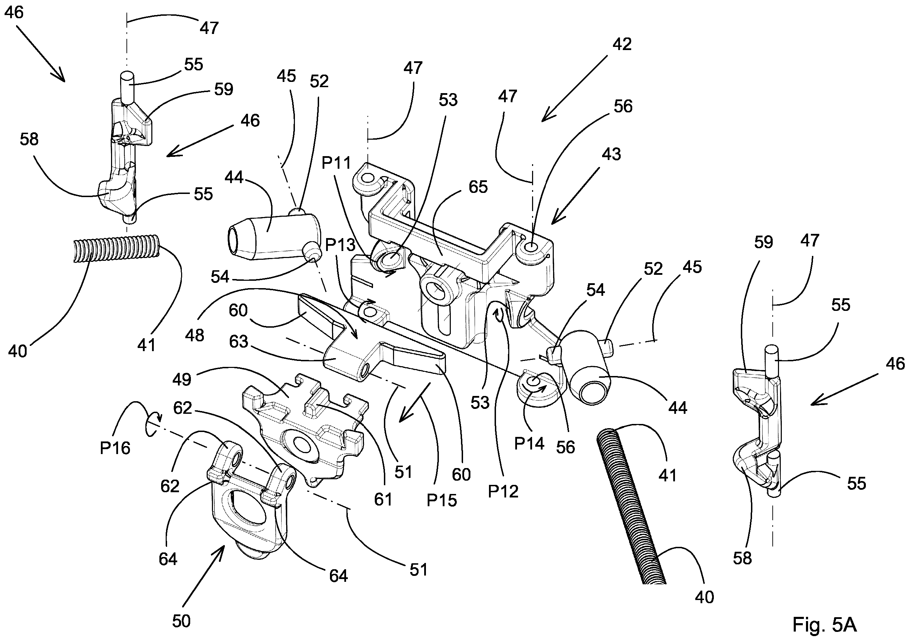

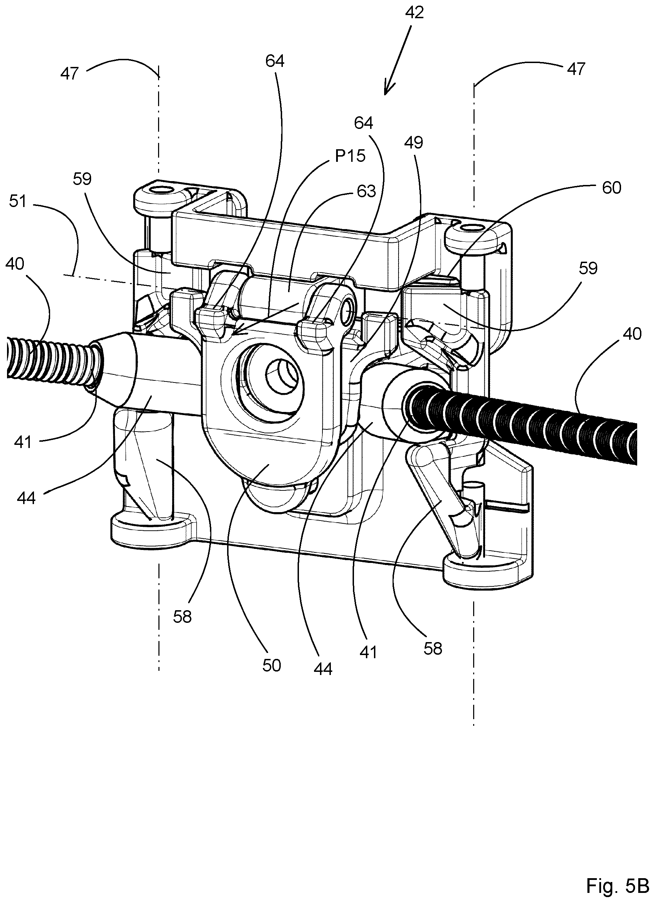

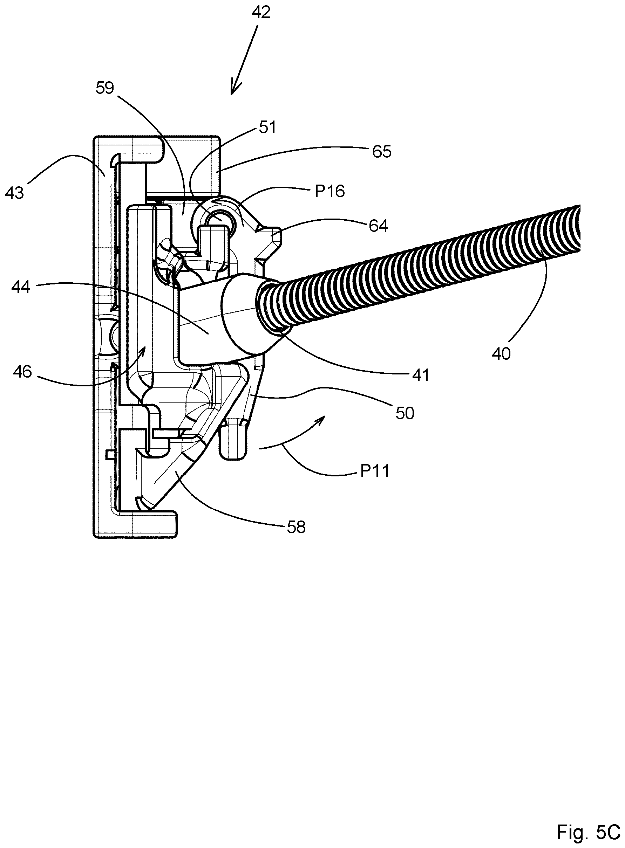

Figures 5A-5C show an exploded view, a perspective front view and a side view of a first embodiment of the locking mechanism 42 of the child vehicle seat 21 according to the invention, with the biasing elements 40 in the use position.

The locking mechanism 42 comprises a support plate 43 connected to the back plate 43, two holders 44 being pivotably about pivot axes 45 connected to the support plate 43, two first actuators 46 being pivotably about pivot axes 47 connected to the support plate 43, a second actuator 48 being linear movably connected to the support plate 43, a cover plate 49 for maintaining the holders 44 and the actuators 46, 48 in different positions with respect to the support plate 43, a lever 50 being pivotably about pivot axes 51 connected to the linear movable second actuator 48.

Each biasing element 40 is connected with its first end 41 to one of the holders 44. Each holder 44 is provided with a pin 52 which are rotatably mounted in holes 53 of the support plate 43 as well as with a pin 54 being supported by the cover plate 49.

By means of the pins 52, 54 the holders 44 are freely pivotably about pivot axes 45 in and opposite to directions indicated by arrows P11, P12 with respect to the support plate 43.

The first actuators 46 are pivotably about pivot axes 47 extending substantially vertical. Each first actuator 46 is provided with two pins 55 being rotatably mounted in holes 56 in the support plate 43. By means of the pins 55 the first actuators 46 are pivotably about pivot axes 47 against spring force of springs (not shown) in directions indicated by arrows P13, P14 with respect to the support plate 43 from a closed position to an opened position. The first actuators 46 are pivotably about pivot axes 47 under spring force of the same springs (not shown) opposite to the directions indicated by arrows P13, P14 from the opened position to the closed position. Each first actuator 46 is provided with two knobs 58, 59. In the use position of the biasing elements 40, the biasing elements 40 are located between these knobs 58, 59 on a first side of the biasing elements 40.

The second actuator 48 is provided with two inclined surfaces 60 located between the support plate 43 and the knobs 59 of the first actuators 46 and cooperating with the knobs 59. The second actuator 48 is linear movable against spring force in a direction indicated by arrow P15 with respect to the support plate 43.

The cover plate 49 is provided with a protrusion 61 cooperating with a recess (not shown) in the second actuator 48 for guiding the linear movement of the second actuator 48.

The lever 50 is provided with two spaced apart ears 62 located on different sides of a tube 63 being connected to the second actuator 48. Through the ears 62 and the tube 63 a pen (not shown) due to which the lever 50 is pivotably about pivot axis 51 against spring force in the direction indicated by arrow P16 with respect to the second actuator 48.

The lever 50 is provided with two knobs 64 directed away from the support plate 43 in the position as shown in figure 5A.

In the position as shown in the figures 5A-5C the biasing elements 40 are in the use position. When the harness 32 is in the unfastened position, the biasing elements 40 pushes the shoulder belts 33 under spring force to an open child-receiving position like the position as shown in figure 1.

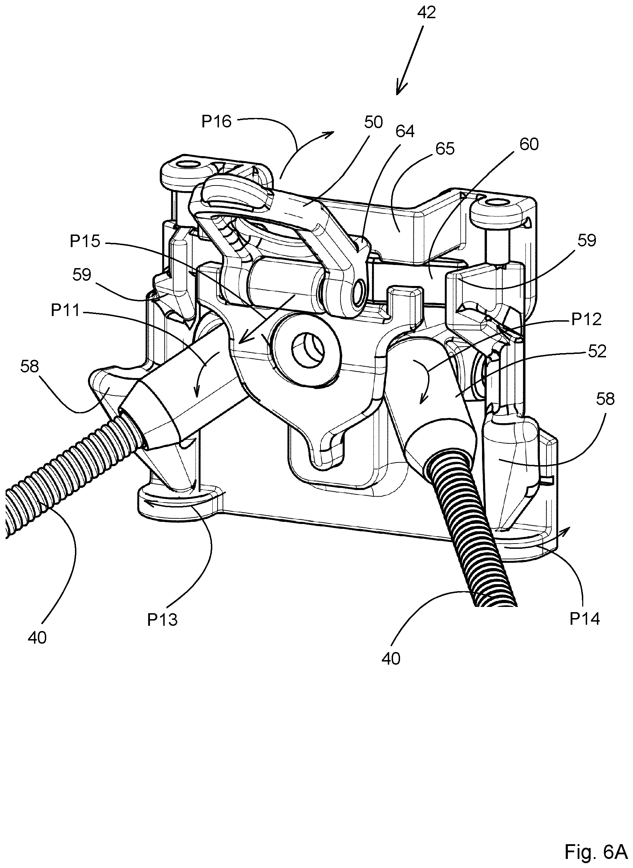

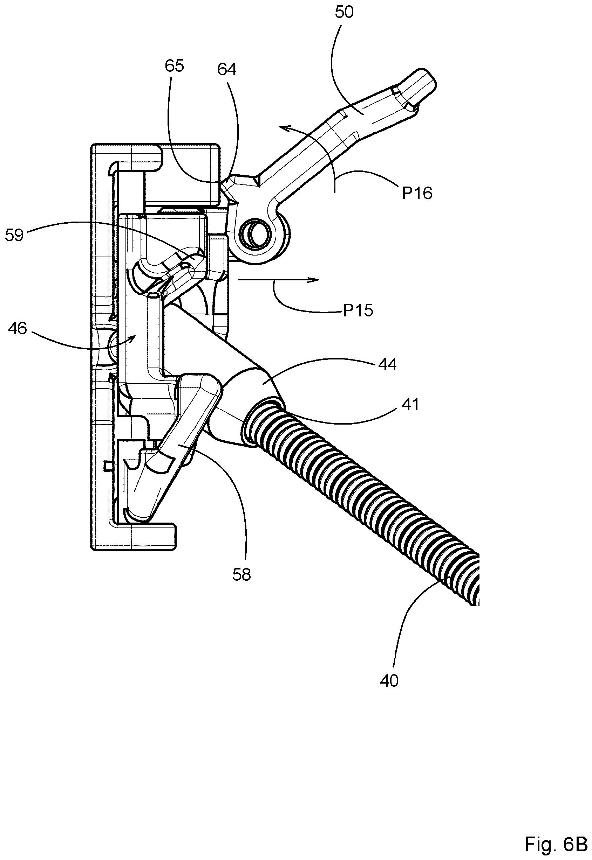

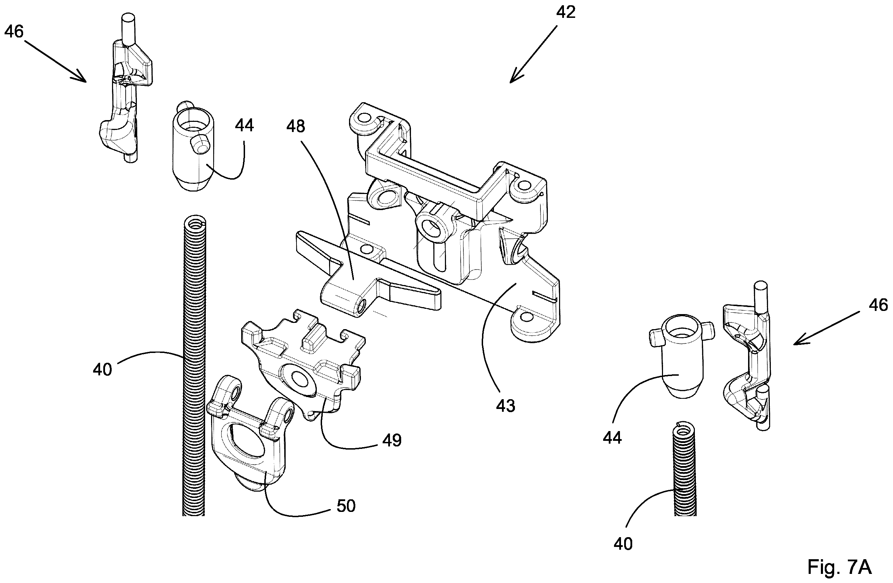

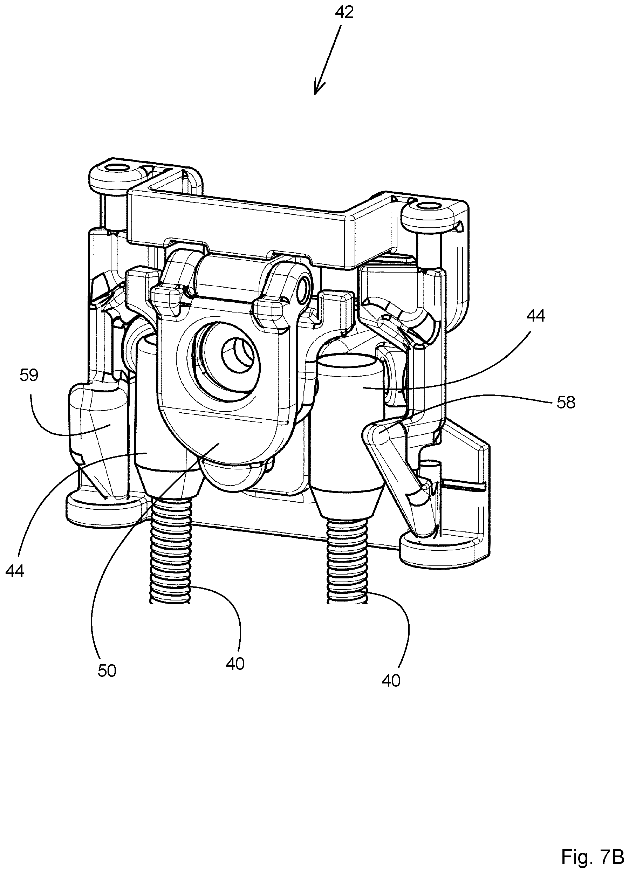

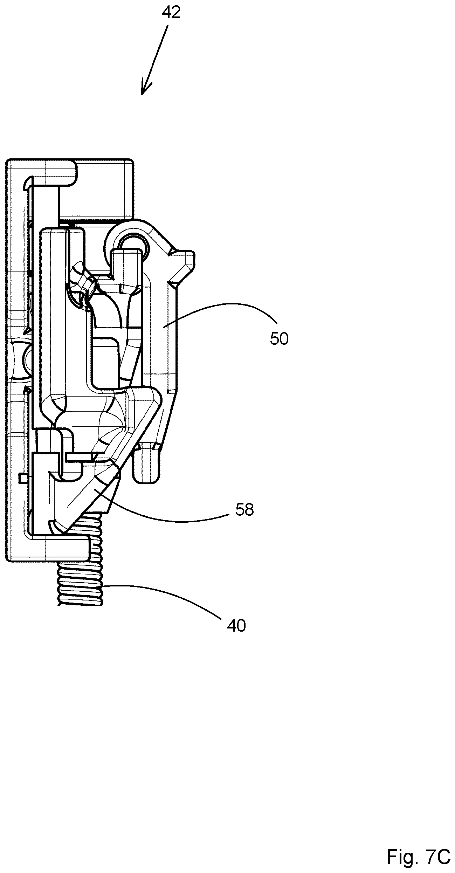

When the child vehicle seat 21 according to the invention will be used as a group 2/3 seat, a user, like a parent, folds the upholstery temporarily away from the seat and moves the lever 50 of the locking mechanism 42 against spring force in the direction indicated by arrow P16 with respect to the second actuator 48, until the knobs 54 will be pressed against a front part 65 of the support plate 43. When further moving the lever 50 of the locking mechanism 42 in the direction indicated by arrow P16, the lever 50 as well as the second actuator 48 connected thereto via pivot axis 51 will be moved linearly in the direction as indicated by arrow P15. By doing so the two inclined surfaces 60 will be pushed against the knobs 59 of the first actuators 46, thereby forcing the first actuators 46 to be pivoted in directions indicated by arrows P13, P14. The holders 44 will pivot simultaneously under gravity about the pivot axes 45 in the directions indicated by arrows P11, P12 with respect to the support plate 43 towards the intermediate positions as shown in figures 6A-6B to the stored positions as shown in figures 7A-7C.

When releasing the lever 50, the lever 50 will be pivoted under spring force in opposite direction as indicated by arrow P16 with respect to the second actuator 48 whereby the knobs 54 will lose contact with the front part 65 of the support plate 43. Subsequently the lever 50 as well as the second actuator 48 will be moved linearly in opposite direction as indicated by arrow P15 and the two inclined surfaces 60 will be no longer push against the knobs 59 of the first actuators 46. The first actuators 46 will be pivoted under spring force opposite to directions indicated by arrows P13, P14 until the biasing element 40 are located below knobs 58 into the stored positions. Due to the knobs 58 the biasing elements 40 are prevented from easily moving back to the use position.

As can be seen in the figures 7A-7C, the biasing elements 40 extend substantially parallel to each other and to the back plate 43 in the stored position. Since the shoulder belts 33 are connected to or provided with the biasing elements 40, also the shoulder belts 33 will be positioned against the back plate 43 and will be stored along the backrest portion 27. The lap belts 34 will also be moved against the seat portion 26 or backrest portion 27. The upholstery will be moved back in place after which the harness 32 is no longer visible but still present on the child vehicle seat 21.

When the child vehicle seat 21 according to the invention will be used as a group 2/3 seat, preferably the headrest 28 together with the locking mechanism 42 and the shoulder belts 33 with the biasing elements 40 are moved upwardly, to adjust the child vehicle seat 1 to the larger child to be seating in the child vehicle seat 21.

When a user wants to use the child vehicle seat 21 again as a group 1 seat, the user moves the headrest 28 downwards again and temporarily folds the upholstery away. Subsequently the user moves the biasing elements 40 together with the shoulder belts 33 back to the use position by moving the biasing elements 40 in opposite directions indicated by arrows P11, P12 with respect to the support plate 43 towards the intermediate positions as shown in figures 6A-6B to the use positions as shown in figures 5A-5C. When pivoting the biasing elements 40 in opposite directions indicated by arrows P11, P12, the biasing elements 40 are pressed against inclined surfaces of the knobs 58, thereby pivoting the first actuators 46 against spring force in the directions indicated by arrows P13, P14 to the opened positions until the biasing elements 40 are located between the knobs 58,59 in the use positions. Subsequently, the first actuators 46 will move under spring force opposite to directions indicated by arrows P13, P14 back to their closed positions.

Due to the knobs 58 of the first actuators 46 the biasing elements 40 are prevented from easily moving back to the stored position. After folding back the upholstery, the child vehicle seat 21 can be used again as a group 1 seat.

The first actuators 46 form locking parts being movable against spring force from the closed position wherein the corresponding biasing element 40 is in the locked position or in the use position, to the opened position of the two locking parts to enable the biasing elements 40 to be moved from the locked position to the use position and vice versa.

In figure 8 the headrest 28 is in a second headrest position and will be used as a group 2/3 seat for larger children.

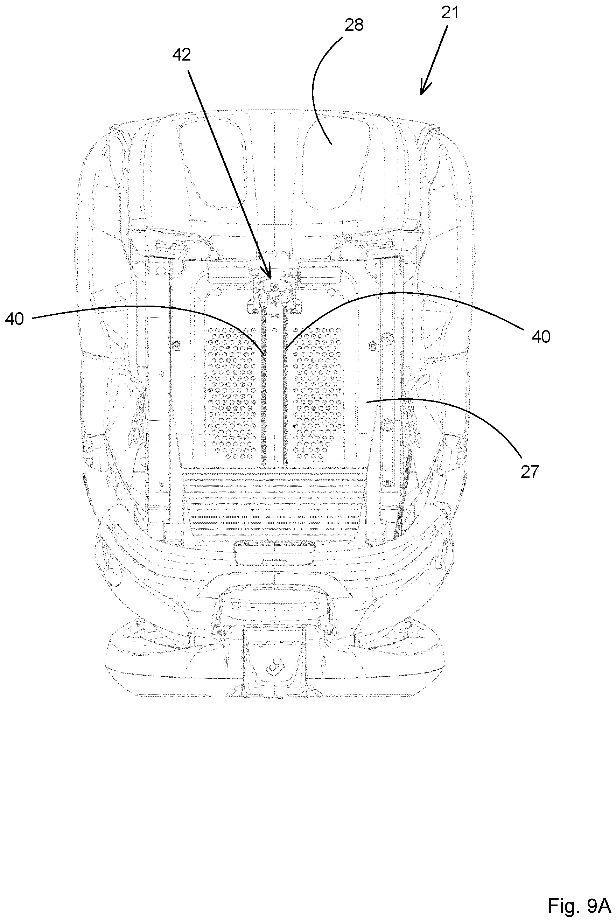

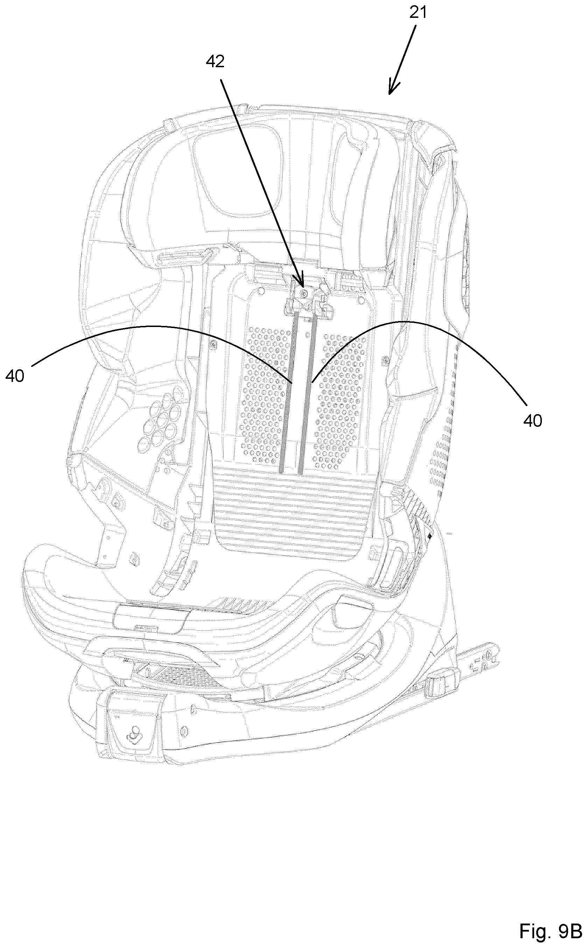

Figures 9A and 9B show a front view and a perspective view of the child vehicle seat 21 as shown in figure 8, with the harness 32 in the unfastened and stored position wherein the biasing elements are in a non-loaded state having an elongated straight shape, whereby the shoulder belts 33 as well as the biasing elements 40 extend along the backrest portion 27

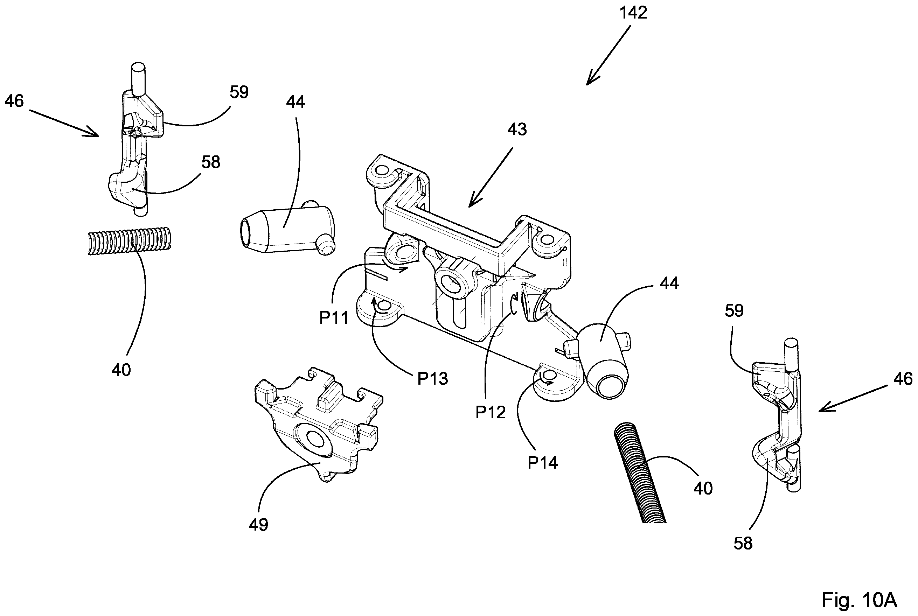

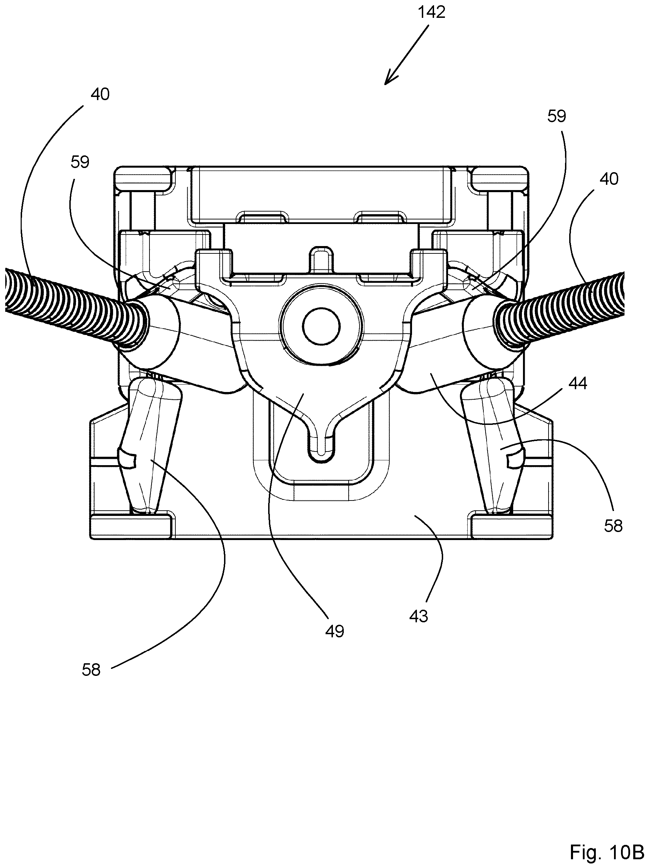

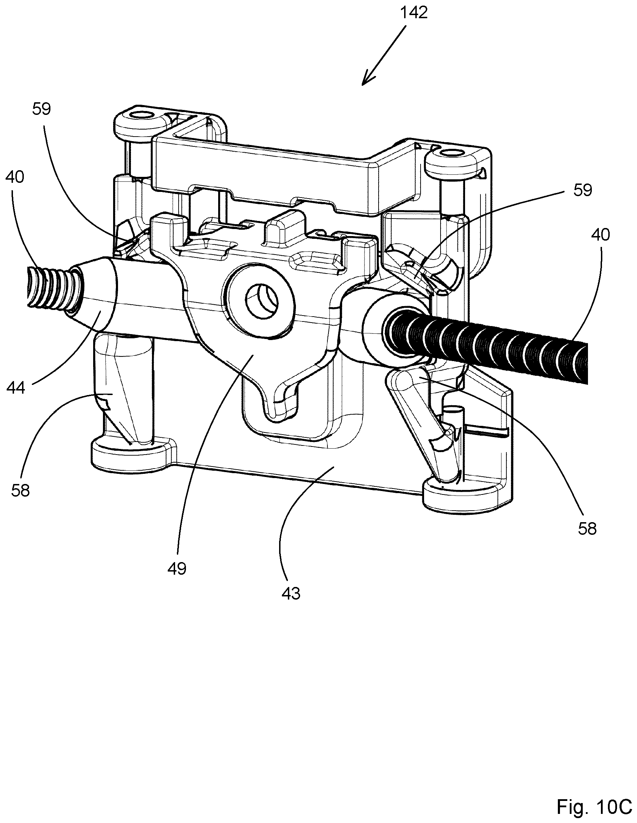

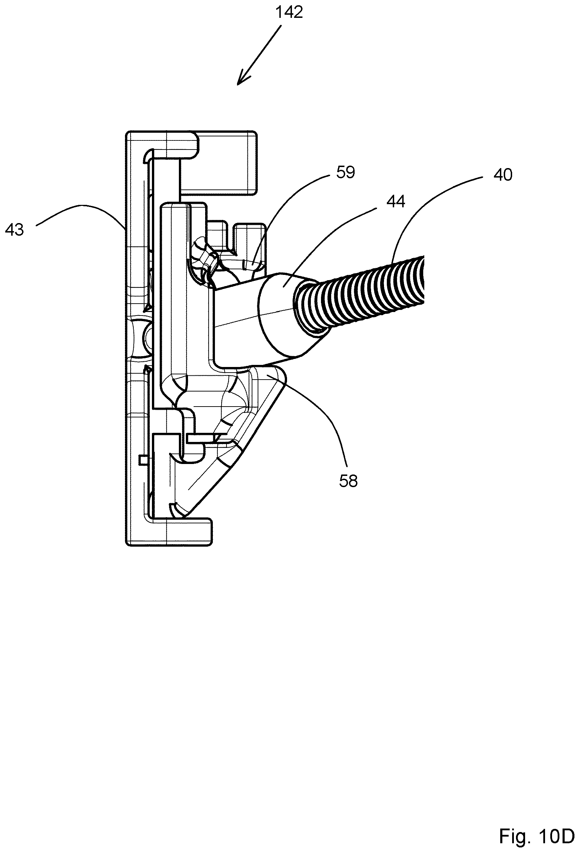

Figures 10A-14B are exploded views, perspective front views, perspective side views and side views of a second embodiment of locking mechanism 142 of the child vehicle seat 21 according to the invention.

Locking mechanism 142 is similar to locking mechanism 42, except that it does not comprise the actuator 48 and the lever 50.

In figures 10A-10D the biasing elements 40 are in the use positions and are locked between the knobs 58, 59 of the first actuators 46. As can better be seen now, than by the locking mechanism 42, the holders 44 are also maintained in position by cover plate 49.

To move the biasing elements 40 from the use positions to the stored positioned, a user can move moves first one biasing element 40 and subsequently the other biasing element 40 to the stored positions or can move both biasing elements 40 simultaneously to the stored positions.

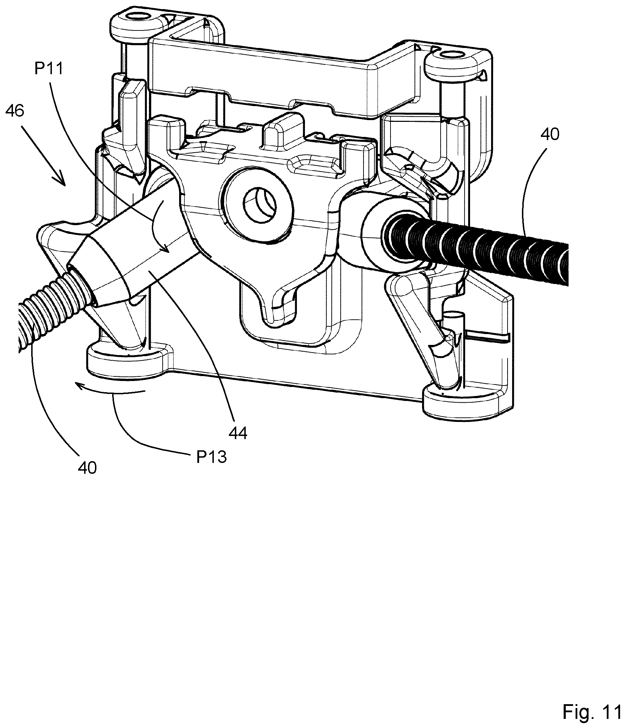

In figure 11 the user pushes the left actuator 46 against spring force in the direction as indicated by arrow P13 to an opened position, whereafter the user pushes the left holder 44 with the biasing element 40 downwards in the direction indicated by arrow P11 to the stored position or let the holder 44 fall under gravity.

The right biasing element 40 is still in the use position, whilst the left biasing element 40 is in an intermediate position between the use position and the stored position.

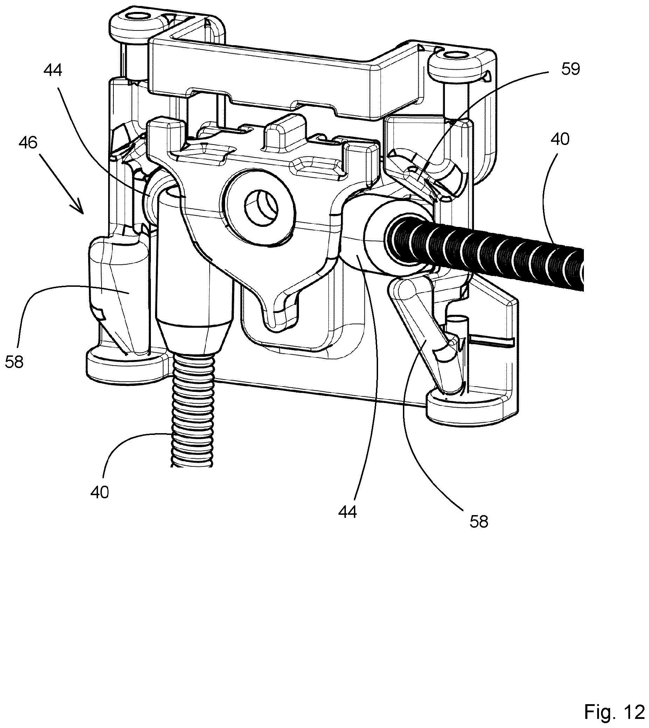

Figure 12 is a perspective side view of the locking mechanism 142 with the right biasing element 40 in the use position and the holder 44 between the knobs 58, 59, whilst the left biasing element 40 is in the stored position. The user no longer holds the left actuator 46 in the opened position so that is has moved back under spring force to the closed position, wherein the knob 58 prevents the left biasing element 40 from easily moving back to the use position.,

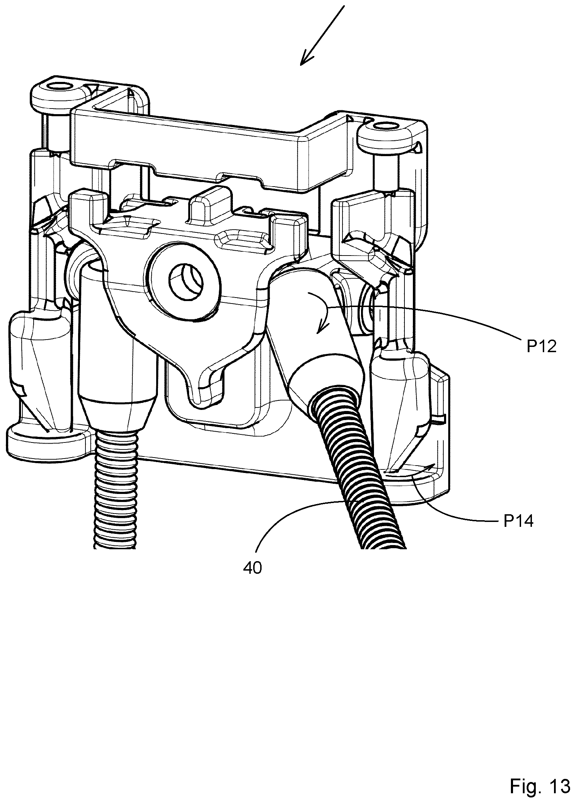

In figure 13 the user pushes the right actuator 46 against spring force in the direction as indicated by arrow P14 to an opened position, whereafter the user pushes the right holder 44 with the biasing element 40 downwards in the direction indicated by arrow P12 to the stored position or let the holder 44 fall under gravity.

The left biasing element 40 is still in the stored position, whilst the right biasing element 40 is in an intermediate position between the use position and the stored position.

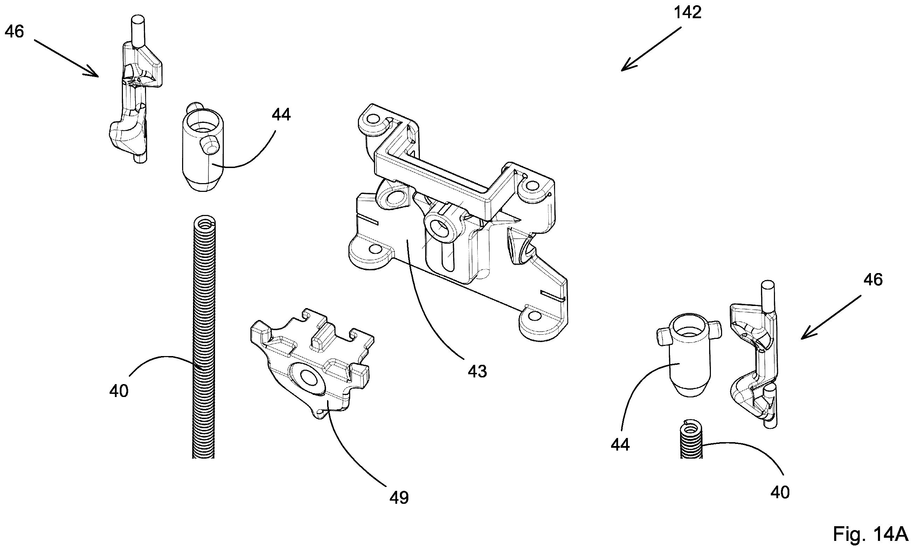

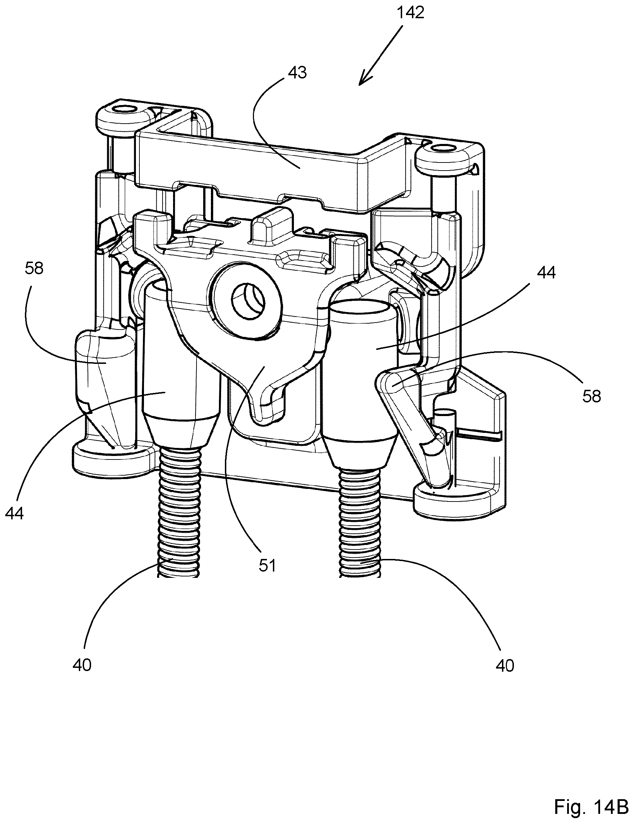

Figures 14A-14B are an exploded view and perspective side view of locking mechanism 142 with both biasing elements in the stored position. The user no longer holds the actuators 46 in the opened position so that they have moved back under spring force to the locked position, wherein the knobs 58 prevent the biasing elements 40 from easily moving back to the use position.

The actuators 46 are independently movable against spring force from the locked position to the opened position.

The shoulder belts 33 and the lap belts 34 can now be stored behind the upholstery. The child vehicle seat 21 can be used as a group 2/3 seat.

Using the child vehicle seat 21 again as a group 1 seat, the user moves the biasing elements back in the same manner as by locking mechanism 42.

It is also possible that the locking mechanism 42 is directly connected to the backrest portion 27.

### LIST OF REFERENCE SIGNS

- 1: child vehicle seat
- 2: base
- 3: seat
- 4: seat portion
- 5: backrest portion
- 6: armrest
- 7: crotch member
- 8: buckle lock
- 9: belt
- 10: belt
- 11: belt buckle
- 12: belt buckle
- 13: buckle tongue
- 14: buckle tongue
- 15: spring sleeve
- 16: spring sleeve
- 17: spring sleeve
- 18: spring sleeve
- 19: arm passage
- 21: child vehicle seat
- 22: base
- 23: seat
- 24: inlay
- 25: knob
- 26: seat portion
- 27: backrest portion
- 28: headrest
- 29: inlay seat portion
- 30: inlay backrest portion
- 31: side portion
- 32: harness
- 33: shoulder belt
- 34: lap belt
- 35: crotch belt
- 36: buckle
- 37: strap
- 38: belt guide
- 39: support leg
- 40: biasing element
- 42: locking mechanism
- 43: support plate
- 44: holder
- 45: pivot axis
- 46: first actuator
- 47: pivot axis
- 48: second actuator
- 49: cover plate
- 50: lever
- 51: pivot axis
- 52: pin
- 53: hole
- 54: pin
- 55: pin
- 56: hole
- 58: knob
- 59: knob
- 60: inclined surface
- 61: protrusion
- 62: ear
- 63: tube
- 64: knobs
- 65: front part
- 142: locking mechanism
- P1: arrow
- P2: arrow
- P3: arrow
- P4: arrow
- P5: arrow
- P6: arrow
- P7: arrow
- P11: arrow
- P12: arrow
- P13: arrow
- P14: arrow
- P15: arrow
- P16: arrow

## Claims

1. A child vehicle seat (21) comprising:
- a seat (23) provided with a seat portion (26) and a backrest portion (27) extending upwardly from the seat portion (4, 26),
- a harness (32) coupled to the seat (23) and adapted to secure a child to the seat (23), wherein the harness (32) is movable from a fastened position to secure the child to the seat (23) to an unfastened position to receive the child in the seat (23) and vice versa, which harness (32) comprises at least two shoulder belts (33) coupled to the backrest portion (27) of the seat (23), whereby each shoulder belt (33) comprises a biasing element (40) for positioning the harness (32) in an open child-receiving position when the harness (32) is in the unfastened position, **characterized in that** the harness (32) is movable to a stored position, wherein the biasing elements (40) have an elongated straight shape, whereby the shoulder belts (33) as well as the biasing elements (40) extend along the backrest portion (5, 27).

2. A child vehicle seat (21) according to claim 1, **characterized in that** the biasing elements (40) are pivotably about pivot axes (45) connected to the backrest portion (5, 27), to be pivotable from the stored position whereby the biasing elements (40) extend from the pivot axes (45) towards the seat portion (26) to a use position, whereby in the open child-receiving position of the harness (32) at least a part of the biasing elements (40) extend from the pivot axes (45, 47, 51) upwards away from the seat portion (4, 26).

3. A child vehicle seat (21) according to claim 1 or 2, **characterized in that** the backrest portion (27) is provided with a locking mechanism (42, 142) to lock the biasing elements (40) in locked positions, when the harness (32) is in the stored position.

4. A child vehicle seat (21) according to claim 3, **characterized in that** the backrest portion (27) comprises a headrest (28) being movable with respect to the backrest portion (27), wherein the locking mechanism (42, 142) is mounted on the headrest (28) of the backrest portion (27).

5. A child vehicle seat (21) according to claim 3 or 4, **characterized in that** the locking mechanism (42, 142) comprises two locking parts, one for each biasing element (40), wherein each locking part being movable against spring force from a closed position wherein the corresponding biasing element (40) is maintained locked in the locked position or maintained in the use position to position the corresponding shoulder belt (33) of the harness (32) in an open child-receiving position when the harness (32) is in the unfastened position to an opened position of the two locking parts to enable the biasing elements (40) to be moved from the locked position to the use position and vice versa.

6. A child vehicle seat (21) according to claim 5, **characterized in that** the locking parts are independently movable against spring force from the closed position to the opened position.

7. A child vehicle seat (21) according to claim 5, **characterized in that** the locking mechanism (42, 142) comprises a lever mechanism (50) to simultaneously move the locking parts against spring force from the closed position to the opened position.

8. A child vehicle seat (21) according to claim 5, 6 or 7, **characterized in that** the biasing elements (40) are pivotably connected to the locking mechanism (42, 142).

9. A child vehicle seat (21) according to one of the preceding claims, **characterized in that** in the stored position of the harness (32), the shoulder belts (33) as well as the biasing elements (40) extend substantially parallel to the backrest portion (27).

10. A child vehicle seat (21) according to one of the preceding claims, **characterized in that** in the stored position of the harness (32), the biasing elements (40) extend substantially parallel to each other.

11. A child vehicle seat (21) according to one of the preceding claims, **characterized in that** in the stored position of the harness (32), the shoulder belts (33) as well as the biasing elements (40) are hidden behind upholstery of the backrest portion (27).

12. A child vehicle seat (21) according to one of the preceding claims, **characterized in that** the biasing element (40) comprises an elongated straight coiled spring.
